# EUROPÄISCHE PATENTANMELDUNG

(11) **EP 3 243 652 A1**
(43) Veröffentlichungstag der Anmeldung: **15.11.2017**
(21) Anmeldenummer: 16169077.1
(22) Anmeldetag: 11.05.2016
(51) Int. Cl.: B32B 17/10, B29C 45/14, B29C 65/70, B44C 5/04

(54) **THERMOPLASTISCHER TRÄGER/GLAS-VERBUND**

(71) Anmelder: Covestro Deutschland AG, 51373 Leverkusen (DE)
(72) Erfinder: Klein, Andreas, 51371 Leverkusen (DE); Grosser, Ulrich, 51515 Kürten (DE); Fey, Axel, 51375 Leverkusen (DE)
(74) Vertreter: Levpat

(57) **Zusammenfassung**

Die vorliegende Erfindung betrifft ein Verbundbauteil aus
a) einer Schicht aus Glas,
b) einer Schicht aus einem thermoplastischen Material,
c) einer zwischen den Schichten a) und b) angeordneten Schicht aus thermoplastischem Polyurethan und
d) einer zwischen den Schichten a) und c) liegende Haftvermittlerschicht,
wobei das Glas chemisch vorgespannt ist,
und ein Verfahren zur Herstellung eines solchen Verbundbauteils.

## Beschreibung

Die vorliegende Erfindung betrifft Verbundbauteile aus einer Glasschicht und einer thermoplastischen Schicht, insbesondere einer Polycarbonatschicht, ein Verfahren zur Herstellung derartiger Verbundbauteile und Elemente zur Fahrzeuginnenraumgestaltung umfassend derartige Verbundbauteile.

Für die Gestaltung von beispielsweise Fahrzeuginnenräumen werden derzeit hardgecoatete Folien eingesetzt, um einen hochwertigen Eindruck zu vermitteln. Diese Folien werden durch Beschichtung von Trägerfolien mit einem UV-aktiven Hardcoatlack hergestellt. Dabei müssen die Folien zunächst verformt werden, bevor sie UV-gehärtet werden. Anschließend werden die Folien hinterspritzt.

Der Prozess zur Herstellung der Folien ist sehr energieaufwendig und ergibt einen erheblichen Ausschuss. Es ist außerdem so, dass die Anforderungen an die Qualität der Bauteile für den Fahrzeuginnenraum, insbesondere an die optische Erscheinung, immer weiter steigen. Mit herkömmlichen Hardcoatfolien lassen sich die derzeit bereits geforderten Spezifikationen der Automobilhersteller kaum noch erfüllen. Hardcoatfolien weisen zudem nur eine sehr begrenzte Kratz- und Chemikalienbeständigkeit auf.

Es wäre daher wünschenswert, Bauteile mit ästhetischem Erscheinungsbild für die Gestaltung von insbesondere Fahrzeuginnenräumen zu haben, welche sich energiesparender und einfacher herstellen lassen als Bauteile mit applizierten hardgecoateten Folien, dabei aber ein optisch ansprechendes Bild mit hoher Oberflächenqualität bieten. Die Schichten des Bauteiles sollten wünschenswerter Weise eine gute Haftung zueinander aufweisen. Weiter wäre es wünschenswert, Bauteile für den Fahrzeuginnenraum bereitzustellen, welche eine bessere Kratz- und/oder Chemikalienbeständigkeit aufweisen als Bauteile mit hardgecoateten Folien. Die Aufgabe bestand vorliegend daher darin, entsprechende Bauteile und ein Verfahren zu deren Herstellung bereitzustellen.

Überraschenderweise wurde nun gefunden, dass sich ein Vorteil, mehrere oder auch alle der vorgenannten Vorteile durch ein Verbundbauteil erzielen lassen, welches
a) eine Schicht aus Glas,
b) eine Schicht aus einem thermoplastischen Material,
c) eine zwischen den Schichten a) und b) angeordneten Schicht aus thermoplastischem Polyurethan und
d) eine zwischen den Schichten a) und c) liegende Haftvermittlerschicht aufweist,
dadurch gekennzeichnet, dass das Glas chemisch vorgespannt ist.

Bevorzugt handelt es sich bei dem erfindungsgemäßen Verbundbauteil um ein Bauteil mit einer dreidimensional geformten Oberfläche, insbesondere um ein Bauteil zur Gestaltung eines Dekorbauteils für den Fahrzeuginnenraum, besonders bevorzugt um eine Mittelkonsolenabdeckung, eine Klimablendenabdeckung, eine Rücksitzlehne, eine Türseitenverkleidung, eine Gehäuseabdeckung oder um Dekorelemente eines Armaturenbrettes für ein Kraftfahrzeug. Erfindungsgemäße Verbundbauteile sind aber auch Platten.

Unter einem Bauteil mit einer "dreidimensional geformten" Oberfläche bzw. einem "dreidimensional geformten Bauteil" werden erfindungsgemäß solche Bauteile verstanden, welche eine von einer Platte abweichende Geometrie aufweisen, d.h. eine Oberfläche aufweisen, die von einer Ebene abweicht, etwa durch eine Krümmung, Wellenstruktur oder anderweitige Formung.

Unter "chemisch vorgespanntem Glas" wird erfindungsgemäß bevorzugt verstanden, dass in das Glas durch einen Ionenaustauschprozess in einer etwa 400°C heißen alkalischen Salzschmelze in der oberflächennahen Schicht Druckspannungen eingebracht werden, die ein Risswachstum erschweren. Während ein normales Glas bei einer Punktlast von 5 Newton Risse zeigt, tritt eine Rissbildung bei chemisch vorgespannten Gläsern bevorzugt erst bei Lasten von über 40 Newton auf. Bevorzugt sind chemisch vorgespannte Gläser auch zwei- bis dreimal kratzfester als herkömmliche Gläser. Es werden bei der chemischen Vorspannung üblicherweise kleinere Alkaliionen (z.B. Na⁺) in dem Glas durch größere Ionen (z.B. K⁺) ersetzt. Hierdurch wird ein Spannungsprofil in das Glas eingebracht. Ein chemisch vorspannbares Glas und seine chemische Vorspannung ist beispielsweise in DE 10 2013 103 573 A1, EP 2 532 628 A1 bzw. DE 11 2013 006 831 T5 beschrieben. Weitere, chemisch vorgespannte Gläser und Vorspannprozesse sind in DE 10 2013 110 098 A1 beschrieben.

Die erfindungsgemäßen, bevorzugt dreidimensional geformten Bauteile lassen sich verhältnismäßig kostengünstig herstellen, und zwar bevorzugt in einem Spritzgießverfahren. Ein energieaufwendiger Laminationsschritt ist nicht erforderlich. Gegenstand der Erfindung ist daher auch ein Verfahren zur Herstellung eines solchen Bauteils.

Aus der Literatur sind Verfahren zur Herstellung von Verbundbauteilen aus Glas- und thermoplastischen Schichten, etwa Polycarbonat-Schichten, bekannt. So beschreibt beispielsweise EP 0 295 596 A2 die Herstellung von Sicherheitsglas in Form eines Laminats aus Glas und Polycarbonat durch Lamination mit thermoplastischem Polyurethan bei hoher Temperatur. Nach dem in diesem Dokument beschriebenen Verfahren können jedoch Bauteile mit einer dreidimensional geformten Oberfläche nicht hergestellt werden.

Ein anderes Verfahren ist in US 4,600,640 beschrieben: Glas und Polycarbonat werden mittels eines UV-aktiven Systems verklebt. Auch durch dieses Verfahren lassen sich keine Bauteile mit einer dreidimensional geformten Oberfläche erhalten.

Als Glas für Schicht a in dem erfindungsgemäßen Verbundbauteil wird bevorzugt Alumosilikatglas, weiter bevorzugt gefloatetes Alumosilikatglas, verwendet. Diese Art von Glas weist ein sehr hohes Maß an Schlag- und Biegezugfestigkeit sowie eine hohe Kratzfestigkeit auf. Eine hohe Festigkeit erreicht das eingesetzte Glas dadurch, dass es chemisch vorgespannt ist, was üblicherweise über Ionenaustausch erfolgt. Bevorzugt weist die Schicht a eine Dicke von 20 µm bis 3,0 mm, weiter bevorzugt von 50 µm bis 2,0 mm, besonders bevorzugt von 0,1 mm bis 1,5 mm, ganz besonders bevorzugt von 0,5 mm bis 1,0 mm auf.

Der Begriff "gefloatet" betrifft den Herstellungsprozess des Glases. Der Fachmann kennt diesen Begriff. Bei dem Floatverfahren erfolgt die Formgebung des Glases durch Aufgießen des flüssigen Glases auf flüssiges Metall in einer reduzierten Atmosphäre aus Formiergas. Üblicherweise erfolgt die Formgebung des Glases nicht nur durch das Glattfließen des Glases auf dem Metallbad, in der Regel einem Zinnbad, sondern auch durch den Einsatz sogenannter Top-Roller, welche auf die Glasoberfläche eine Kraft ausüben. Während des Transportes auf dem Metallbad erkaltet das Glas und wird schließlich abgehoben und zur thermischen Entspannung in einen Kühlofen überführt. Das Floatverfahren ist beispielsweise in DE 10 2014 203 564 A1, DE 10 2014 205 658 A1 oder DE 10 2014 203 564 A1 beschrieben.

Die Schicht aus thermoplastischem Material weist bevorzugt eine Dicke von 0,5 bis 10 mm auf, besonders bevorzugt von 1,0 bis 6,0 mm, ganz besonders bevorzugt von 1,5 bis 3,0 mm.

Das thermoplastische Material basiert bevorzugt auf Polycarbonat. Besonders bevorzugt ist das thermoplastische Material ein Polycarbonat oder eine Polycarbonat-Zusammensetzung. "Polycarbonat-Zusammensetzungen" sind solche Zusammensetzungen, deren Basismaterial, d.h. überwiegend vorhandene Komponente, ein Polycarbonat ist. " Überwiegend" bedeutet hierbei mehr als 50 Gew.-%, bevorzugt mehr als 70 Gew.-%, weiter bevorzugt mehr als 80 Gew.-%, noch weiter bevorzugt mehr als 90 Gew.-% Polycarbonat. Neben dem Polycarbonat enthalten diese Zusammensetzungen übliche Additive wie Flammschutzmittel, Thermostabilisatoren, UV-Stabilisatoren, IR-Stabilisatoren, Entformungsmittel, Fließhilfsmittel, Antistatika, Schlagzähmodifikatoren, Farbmittel und/oder Füllstoffe. Geeignete übliche Additive für Polycarbonatzusammensetzungen sind beispielsweise beschrieben im "Additives for Plastic Handbook", John Murphy, Elsevier, Oxford 1999 oder im "Plastics Additives Handbook", Hans Zweifel, Hanser, München 2001.

Polycarbonate im Sinne der vorliegenden Erfindung sind sowohl Homopolycarbonate als auch Copolycarbonate und Polyestercarbonate; die Polycarbonate können in bekannter Weise linear oder verzweigt sein. Erfindungsgemäß können auch Mischungen von Polycarbonaten verwendet werden.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die Herstellung aromatischer Polycarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich.

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Als thermoplastisches Polyurethan (TPU) eignen sich insbesondere aliphatische Typen, die den Vorteil der Lichtstabilität und der geringen Vergilbung haben. Solche Typen sind zum Beispiel in der EP 1 101 784 A2 beschrieben.

Gut geeignet sind auch Thermoplastische Polyurethane mit einer Härte von Shore A von 90 bis Shore D von 85, wobei die Shore-Härte nach ISO 7619-1:2010 bestimmt wird.

Thermoplastische Polyurethane werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Die eingesetzten thermoplastischen Polyurethane sind bevorzugt Reaktionsprodukte aus:
I) organischen Diisocyanaten
II) Polyetherdiolen
III) Kettenverlängerern.

Als Diisocyanate (I) können aromatische, aliphatische, araliphatische, heterocyclische und cycloaliphatische Diisocyanate oder Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im Einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenyl-methandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiiso-cyanat.

Vorzugsweise verwendet werden 1,6-Hexamethylendiisocyanat, Isophorondiisocyanat, Dicyclo-hexylmethan-4,4'-diisocyanat, Diphenylmethandiisocyanat-Isomerengemische mit einem 4,4'-Diphenylmethandiisocyanatgehalt von >96 Gew.-% und insbesondere 4,4'-Diphenylmethan-diisocyanat und 1,5-Naphthylendiisocyanat.

Die genannten Diisocyanate können einzeln oder in Form von Mischungen zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder mit Polyphenyl-polymethylen-polyisocyanaten.

Zerewitinoff-aktive Polyetherdiole (II) sind solche mit im Mittel mindestens 1,8 bis höchstens 3,0, bevorzugt 1,8 bis 2,2, Zerewitinoff-aktiven Wasserstoffatomen und einem zahlenmittleren Molekulargewicht M̅ₙ von 500 bis 10000 g/mol, vorzugsweise 500 bis 6000 g/mol.

Geeignete Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin, 1,2-Butylenoxid und 2,3-Butylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans und des 1,3-Propylenglykols. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im Wesentlichen linearen Polyetherdiole besitzen vorzugsweise zahlenmittlere Molekulargewichte M̅ₙ von 500 bis 10000 g/mol, besonders bevorzugt 500 bis 6000 g/mol. Sie können sowohl einzeln als auch in Form von Mischungen untereinander zur Anwendung kommen.

Zerewitinoff-aktive Kettenverlängerer (III) sind sogenannte Kettenverlängerungsmittel und besitzen im Mittel 1,8 bis 3,0 Zerewitinoff-aktive Wasserstoffatome und haben ein zahlenmittleres Molekulargewicht von 60 bis 500 g/mol. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden Diole oder Diamine mit einem Molekulargewicht von 60 bis 500 g/mol, vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane.

Besonders bevorzugt werden als Kettenverlängerer Ethandiol, 1,2-Propandiol, 1,3-Propandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Die relativen Mengen der Verbindungen (II) und (III) werden bevorzugt so gewählt, dass das Verhältnis der Summe der Isocyanatgruppen in (I) zu der Summe der Zerewitinoff-aktiven Wasserstoffatome in (II) und (III) 0,85:1 bis 1,2:1 beträgt, besonders bevorzugt 0,9:1 bis 1,1:1.

Die gewünschten Härtebereiche können über das Verhältnis der Verbindungen (II) zu den Verbindungen (III) eingestellt werden. Je höher der Anteil der Verbindungen (III) ist, desto höher ist auch die Härte des erhaltenen TPU.

Die erfindungsgemäß eingesetzten, thermoplastischen Polyurethanelastomere (TPU) können als Hilfs- und Zusatzstoffe bis zu maximal 20 Gew.-%, bezogen auf die Gesamtmenge an TPU, der üblichen Hilfs- und Zusatzstoffe enthalten. "Aus thermoplastischem Polyurethan" umfasst daher auch Zusammensetzungen, deren überwiegende Komponente thermoplastisches Polyurethan ist. Typische Hilfs- und Zusatzstoffe sind beispielsweise Katalysatoren, Pigmente, Farbstoffe, Flammschutzmittel, Stabilisatoren gegen Alterungs- und Witterungseinflüsse, Weichmacher, Gleit- und Entformungsmittel, fungistatisch und bakteriostatisch wirkende Substanzen sowie Füllstoffe und deren Mischungen.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den TPU beträgt in der Regel etwa 0 bis 5 Gew.-%, bevorzugt 0 bis 2 Gew.-%, bezogen auf die Gesamtmenge an TPU.

Beispiele für weitere Zusatzstoffe sind Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe sowie Weichmacher und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Die erfindungsgemäß verwendbaren thermoplastischen Polyurethane können kontinuierlich im sogenannten Extruderverfahren, z.B. in einem Mehrwellenextruder, oder im sogenannten Bandverfahren hergestellt werden. Die Dosierung der TPU-Komponenten I), II) und III) kann gleichzeitig, d.h. im one-shot-Verfahren, oder nacheinander, d.h. nach einem Prepolymer-Verfahren, erfolgen. Besonders bevorzugt ist das Prepolymer-Verfahren. Dabei kann das Prepolymer sowohl batchweise vorgelegt, als auch kontinuierlich in einem Teil des Extruders oder in einem separaten vorgeschalteten Prepolymeraggregat, z.B. einem Statikmischer-Reaktor, z.B. Sulzer-Mischer, hergestellt werden.

Die Schicht aus thermoplastischem Polyurethan, welche die Glasschicht mit der Schicht aus thermoplastischem Material, bevorzugt Polycarbonat, verbindet, weist vorzugsweise eine Dicke von 0,5 bis 6 mm, besonders bevorzugt von 1,0 bis 3,0 mm auf.

Bevorzugt ist die Schicht aus thermoplastischem Polyurethan auf der gesamten Überlappungsfläche der Glasschicht mit der Schicht aus thermoplastischem Material, bevorzugt aus Polycarbonat, aufgebracht. Sofern Bereiche vorgesehen sind, in welchen bei der späteren Verarbeitung ein Funktionselement, etwa ein Monitor, integriert werden soll, werden solche Bereiche vorzugsweise ausgespart. Hierzu werden - sofern ein Spritzgussverfahren zur Herstellung des Verbundbauteiles genutzt wird - bevorzugt im Werkzeug entsprechende Bereiche vorgehalten. Während das Glaselement in der ersten Werkzeughälfte liegt, dichtet die zweite Werkzeughälfte, etwa ein Stempel mit Dichtung, dann das Glas und den entsprechenden auszulassenden Bereich gegen die Werkzeugkavität ab, so dass beim Einspritzvorgang im Spritzgussprozess kein thermoplastisches Polyurethan in den auszusparenden Bereich gelangt.

Die Haftvermittlerschicht liegt im Überlappungsbereich der Schichten a) und c) im gesamten Bereich oder in einem Teilbereich vor, bevorzugt im gesamten Bereich.

Als Haftvermittler zwischen der Glasschicht und der Schicht aus thermoplastischem Polyurethan wird bevorzugt eine Aminosilanschicht verwendet.

Die Aminosilane werden üblicherweise aus Verbindungen der allgemeinen Formel R-SiX₃ gewonnen, wobei R einen organisch funktionalisierten Rest und X eine hydrolysierbare Gruppe, bevorzugt eine Alkoxygruppe, bezeichnen. Durch Hydrolysereaktionen mit Wasser bilden sich Silane der Form R-Si(OH)₃. Mit anorganischen Materialien, die an der Oberfläche OH- oder COOH-Gruppen aufweisen, können Silane Kondensationsreaktionen unter Wasserabspaltung eingehen und so einen stabilen Verbund durch chemische Bindungen bilden. Idealerweise werden die Si-Atome dabei über alle drei OH-Gruppen in die Substratoberfläche eingebunden. Alternativ können die eingesetzten Silanhaftvermittler auch direkt mit den chemischen Gruppen an der Oberfläche reagieren, wobei die Kondensationsreaktion dann unter Abspaltung des Alkohols erfolgt. Die organische Gruppe R besteht in der Regel aus einem Spacer, bevorzugt einer Propylkette, und einer funktionellen Gruppe.

Die Aminosilanschicht kann auf beliebige geeignete Weise aufgetragen werden, etwa durch Lackierung oder bei 2D-Anwendungen, beispielsweise bei Platten, auch mittels Siebdruck.

Bevorzugt wird die Aminosilanschicht mittels einer Plasmabehandlung, besonders bevorzugt bei Atmosphärendruck, auf die Glasschicht aufgebracht. Unter Plasmabehandlung wird erfindungsgemäß ein Verfahren verstanden, bei dem die Oberfläche des zu behandelnden Materials mittels eines Plasmas beschichtet wird. Hierzu wird ein Prozessgas, enthaltend ein Trägergas und den Haftvermittler, bevorzugt ein Aminosilan, in den Plasmazustand überführt. Dieses geschieht vorzugsweise, indem mittels Hochspannungsentladung ein gepulster Lichtbogen erzeugt wird. Das Prozessgas, das an dieser Entladungsstrecke vorbeiströmt, wird durch den Lichtbogen angeregt und in den Plasmazustand überführt. Das Plasma wird bevorzugt über einen Düsenkopf auf die Oberfläche des zu behandelnden Materials aufgebracht. Als Trägergas wird bevorzugt Stickstoff, Helium, Argon oder eine Mischung dieser Gase eingesetzt.

Eine Plasmabehandlung ermöglicht ein einfaches Beschichten der dreidimensional geformten Strukturen. Der bei herkömmlichen, plattenartigen Verbundbauteilen verwendete Siebdruck zum Aufbringen von Haftvermittlerschichten ist bei dreidimensional geformten Elementen nicht anwendbar. Durch die Plasmabehandlung lässt sich die gesamte gewünschte Fläche beschichten; es ergeben sich keine Abstände zu Kanten. Durch die Plasmabehandlung lässt sich somit eine Haftung des Trägerelementes und des Glaselementes bis in deren überlappenden äußeren Bereich erreichen. Ein weiterer Vorteil der Plasmabehandlung ist, dass nicht wie beim Siebdruck für jede Geometrie ein Sieb benötigt wird. Auch müssen nicht mehrere Schichten aufgetragen werden, die jeweils separat getrocknet werden müssen, um eine gute Haftung zu erreichen, sondern eine einmalige Behandlung genügt.

Bevorzugt umfasst das Verfahren zur Herstellung des zuvor beschriebenen Verbundbauteils die folgenden Schritte:
a) Einlegen eines Trägerelementes, welches bevorzugt dreidimensional geformt ist, aus einem thermoplastischen Material, bevorzugt aus einem Polycarbonat oder einer Polycarbonat-Zusammensetzung, in eine erste Werkzeughälfte;
b) Einlegen eines chemisch vorgespannten Glaselementes, welches bevorzugt dreidimensional geformt ist, in eine zweite Werkzeughälfte,
c) Schließen des Werkzeuges, welches die erste Werkzeughälfte und die zweite Werkzeughälfte umfasst, wobei ein Spalt zwischen dem bevorzugt dreidimensional geformten Trägerelement und dem bevorzugt dreidimensional geformten Glaselement verbleibt;
d) Einspritzen von thermoplastischem Polyurethan in den Spalt, wobei sich das Glas bevorzugt beim Einspritzen des thermoplastischen Polyurethans nicht mehr bewegt.

Das Verbinden der Glasschicht und der Schicht aus thermoplastischem Material erfolgt hierbei somit durch Hinterspritzen mittels thermoplastischem Polyurethan.

Glas, welches sich dreidimensional formen lässt, ist in der EP 2 540 682 A1 beschrieben.

Bevorzugt umfasst das Verfahren außerdem vor Schritt a) die Herstellung des bevorzugt dreidimensional geformten Trägerelementes aus einem thermoplastischen Material in einer ersten Werkzeugkavität. Dabei wird die erste Werkzeugkavität besonders bevorzugt von der in Schritte a) genannten ersten Werkzeughälfte und einer weiteren Werkzeughälfte gebildet.

Alternativ wird das Trägerelement in einer ersten Werkzeugkavität geformt, nach dem Abkühlen aus dieser entnommen und in die erste Werkzeughälfte aus Schritt a) eingelegt.

Bevorzugt umfasst das Verfahren außerdem den Schritt des dreidimensionalen Verformens des chemisch vorgespannten Glases, welches als Platte beispielsweise von Schott unter der Bezeichnung "Xensation Glas" erhältlich ist. Das dreidimensionale Verformen des chemisch vorgespannten Glaselementes erfolgt vor dem Einlegen des chemisch vorgespannten Glaselementes in die zweite Werkzeughälfte.

Das chemisch vorgespannte Glaselement, das bevorzugt dreidimensional geformt ist und welches in die zweite Werkzeughälfte eingelegt wird, weist entweder bereits eine Haftvermittlerschicht, bevorzugt eine Aminosilanschicht, auf oder aber die Haftvermittlerschicht wird auf das Glaselement aufgebracht, während es sich bereits in der zweiten Werkzeughälfte befindet, bevor das thermoplastische Polyurethan in die Kavität eingespritzt wird.

Die Haftvermittlerschicht, bevorzugt eine Aminosilanschicht, wird bevorzugt mittels Plasmabehandlung unter Atmosphärendruck aufgebracht.

Bevorzugt ist die erste Werkzeughälfte, in welche das bevorzugt dreidimensional geformte Trägerelement aus einem thermoplastischen Material eingelegt wird, die Einspritzseite des Werkzeugs und die zweite Werkzeughälfte, in die das bevorzugt dreidimensional geformte chemisch vorgespannte Glaselement eingelegt wird, die Auswerferseite.

"Auswerferseite" bedeutet hierbei, dass der Schieber, der das Bauteil nach der Herstellung des Verbundbauteils aus der Werkzeugkavität holt, in dieser Werkzeughälfte eingebaut ist.

"Einspritzseite" ist die Seite des Werkzeugs, bei der sich die Düse, bzw. der Heizkanal befindet und wo das Thermoplastbauteil eingelegt wird, durch das ggf. die thermoplastische Schmelze durch Kanäle im Thermoplasten in die Kavität gespritzt wird, so dass das thermoplastische Polyurethan zwischen Glasschicht und Polycarbonatbauteil gelangt.

Wenn das Glaselement nicht oder nahezu nicht während des Einspritzvorganges verschoben wird, kann das Risiko, dass die Glasschicht beim Einspritzen des thermoplastischen Polyurethans bricht, erheblich gesenkt werden. Überraschenderweise hat sich gezeigt, dass es vorteilhaft ist, das thermoplastische Polyurethan direkt in einem Winkel von 90° oder annähernd 90° auf die Hauptebene des chemisch vorgespannten Glases zu spritzen. Die "Hauptebene" ist hierbei durch die eigentliche Fläche des Glaselementes, auf welche das thermoplastische Polyurethan aufgespritzt wird, vorgegeben. Dieses erfolgt bevorzugt mittels eines Stangenangusses oder über einen Heißkanal. "Annähernd" bedeutet hierbei, dass der tatsächliche Winkel nicht wesentlich vom genannten Wert abweicht, wobei eine Abweichung von nicht größer als 25 %, bevorzugt nicht größer als 10 %, ganz besonders bevorzugt nicht größer als 5 %, insbesondere nicht größer als 1 %, als nicht wesentlich gilt. Das Werkzeug über einen Fächeranguss von unten oder oben zu füllen, bzw. von oben nach unten, ist grundsätzlich auch möglich, produziert aber deutlich mehr Ausschuss. Bei Verwendung eines Stangenangusses bleibt das chemisch vorgespannte Glaselement in der Form fixiert, wird also durch den Einspritzvorgang nicht verschoben. Bei der Verwendung eines Fächerangusses hingegen fließt die thermoplastische Schmelze von unten oder oben zwischen das Glaselement und das Trägerelement aus thermoplastischem Material, wobei es zu minimalen Bewegungen des Glaselementes kommt, wodurch das Glas punktuell belastet wird. Wird die Belastung zu groß, kommt es zu einer Rissbildung oder ggf. zum Bruch des Glases. Für eine vorteilhafte Fixierung des Glaselementes in der Werkzeughälfte lässt sich die Werkzeughälfte auch so in Bezug auf das Glaselement dimensionieren, dass ein Verrutschen nicht bzw. kaum möglich ist.

Bevorzugt wird das Glaselement nicht direkt auf die Innenseite der Werkzeughälfte gelegt, sondern eine Folie, etwa aus Polycarbonat oder einer Polycarbonatzusammensetzung, wird zwischen die Werkzeughälfte und das Glaselement gelegt. Alternativ bevorzugt wird eine Polyethylenfolie, die mit eine Haft- bzw. Klebekaschierung versehen ist, auf die Rückeite des in die Werkzeughälfte einzulegenden Glaselementes appliziert. "Rückseite" ist hierbei die Seite des Glaselementes, welche der Seite, auf welche das thermoplastische Polyurethan aufgespritzt wird und auf welche die Schicht aus thermoplastischem Material aufgebracht wird, gegenüberliegt. Die Folie ist bevorzugt vollflächig auf das Glaselement appliziert. "Vollflächig" bedeutet hierbei, dass das die gesamte potentielle Berührungsfläche von Glaselement und Werkzeughälfte mit der Folie versehen wird. Das Glaselement mit der aufgeklebten Folie wird dann so in der Werkzeughälfte positioniert, dass sich die Folie zwischen Werkzeugwand und Glas befindet. Diese Folie dient lediglich als Polsterung, eine dauerhafte Verbindung der Folie mit dem Glaselement erfolgt nicht. Die Folie kann zunächst auf dem Verbundbauteil bleiben, um einen Schutz des Verbundbauteils beim Transport zu haben. Anschließend kann die Folie durch einfaches Abziehen rückstandslos entfernt werden.

Es ist auch bevorzugt, das Glaselement oder das thermoplastische Trägerelement in der jeweiligen Werkzeughälfte durch Unterdruck zu fixieren. Alternativ bevorzugt wird das thermoplastische Trägerelement mittels eines Ionisators elektrisch aufgeladen und wird so mittels Elektrostatik in der Werkzeughälfte fixiert.

Bevorzugt ist das Werkzeug so ausgelegt, dass eine Überlaufkavität vorhanden ist, in die thermoplastisches Polyurethan hineinlaufen kann und die beim Nachdruck als Puffer fungieren kann, um Druckspitzen für das Glas zu minimieren und dieses somit vor dem Bruch bewahren. Dieser Austrieb muss nach der Herstellung des Bauteils entfernt werden.

Bevorzugt wird das Werkzeug, in welches das Trägerelement aus thermoplastischen Material und das Glaselement eingelegt werden, nicht aktiv aufgeheizt. "Nicht aktiv" bedeutet hierbei, dass das Werkzeug nicht durch gerichtete Energiezufuhr auf eine Zieltemperatur aufgeheizt wird. Ein passives Aufheizen durch das Einspritzen des thermoplastischen Polyurethans kann gleichwohl stattfinden.

Weiter bevorzugt weisen das Trägerelement und das Glaselement, beide vorzugsweise dreidimensional geformt, eine Temperatur von + 10 bis + 35°C, besonders bevorzugt eine Temperatur von + 18 bis + 27°C, ganz besonders bevorzugt von + 20 bis + 25°C auf, wenn das thermoplastische Polyurethan in den Spalt gespritzt wird. Bevorzugt liegt dabei die Werkzeugtemperatur zwischen + 10 und + 35°C, besonders bevorzugt bei + 18 bis 27°C, ganz besonders bevorzugt bei +20 bis +25°C. Diese Temperaturangaben berücksichtigen lediglich die Werkzeugtemperatur vor dem Einspritzen des thermoplastischen Polyurethans. Da dieses beim Einspritzen eine gewisse Temperatur, üblicherweise über 200°C, aufweist, kann es zu einem leichten Anstieg der Temperaturen der Werkzeughälften, der Glasschicht und der Trägerschicht aus thermoplastischem Material kommen. Das chemisch vorgespannte Glaselement und das Trägerelement aus thermoplastischem Material können somit ohne zusätzliche thermische Behandlung verwendet werden, d.h. wie als einzelne Elemente bereitgestellt, sei es z.B. durch Bezug bei einem Dritten oder aber Herstellung an einem anderen Ort. Dadurch, dass auch die Werkzeugtemperatur bei Raumtemperatur belassen werden kann, ergeben sich weitere energetische Vorteile.

Dass sich durch diese Prozessführung bei niedriger Temperatur von Werkzeug und Glas- sowie Trägerelement grundsätzlich bei dem thermoplastischen Polyurethan Oberflächenfehler ergeben können, ist bei dem erfindungsgemäßen Verfahren ohne Belang, da Oberflächenfehler bei dem thermoplastischen Polyurethan nach der Entformung nicht zu erkennen sind, da sich diese Schicht zwischen Glasschicht und Trägerelement befindet.

Erfindungsgemäße Bauteile zeigen darüber hinaus im Vergleich zu Bauteilen, die bei einer Werkzeugtemperatur von + 80°C hergestellt wurden, eine sehr geringe Schwindung, wenn sie bei identischen Einspritztemperaturen des thermoplastischen Polyurethans hergestellt wurden.

Sofern das erfindungsgemäße Bauteil für nicht transparente Anwendungen gedacht ist, wird bevorzugt thermoplastisches Polyurethan mit einer Shore A-Härte von 70 bis 90, bestimmt nach ISO 7619-1:2010, verwendet und die Einspritztemperatur beträgt 200 bis 220°C.

Sofern das erfindungsgemäße Bauteil für transparente Anwendungen gedacht ist, wird bevorzugt thermoplastisches Polyurethan mit einer Shore D-Härte von 40 bis 70, bestimmt nach ISO 7619-1:2010, verwendet und die Einspritztemperatur beträgt 230 bis 240°C.

Erfindungsgemäß wird unter "Transparenz" eine Lichttransmission Ty (10°, D65) von größer 50 % und eine Trübung von weniger als 5 %, gemessen nach ASTM D 1003, verstanden. Dabei wird Ty (10°, D65) nach ASTM E 308 berechnet und ist gleich Y10, bezogen auf die Standardlichtquelle D65.

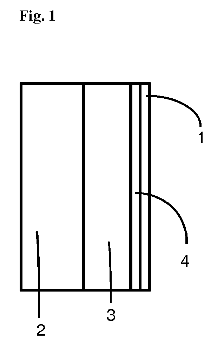

Die Erfindung wird anhand der Figur 1 näher illustriert. Es zeigt
- Fig. 1:: ein erfindungsgemäßes Verbundbauteil.

Figur 1 zeigt ein erfindungsgemäßes Verbundbauteil aus einer Schicht aus chemisch vorgespanntem Glas 1 und einer Schicht aus einem thermoplastischen Material 2, welche über eine Schicht aus thermoplastischem Polyurethan 3 und eine Schicht aus Haftvermittler 4 verbunden sind.

### Beispiele

### 1. Beschreibung der Rohstoffe

- **TPU-1:**: Thermoplastisches Polyurethan des aliphatischen Typs mit einer Shore A von 85, gemessen nach DIN ISO 7619-1:2012-02. Erhältlich unter der Bezeichnung Desmopan® DP 85085 A von der Covestro Deutschland AG.
- **TPU-2:**: Thermoplastisches Polyurethan des Ethertyps mit einer Shore D von 62, gemessen nach DIN ISO 7619-1:2012-02. Erhältlich unter der Bezeichnung Desmopan® DP 9662 DU von der Covestro Deutschland AG. Das TPU-2 ist somit härter als das TPU-1. Die Lichttransmission im sichtbaren Bereich des Spektrums ist deutlich höher als bei TPU-1.
- **PC**-**1:**: Polycarbonatfolie mit einer Foliendicke von 0,75 mm und einer Abmessung von 150 mm x 200 mm, erhältlich unter der Bezeichnung Makrofol® DE 1-1 CG von der Covestro Deutschland AG.
- **Glas-1:**: "Xensation" Glas von Schott mit einer Abmessung von 150 mm x 200 mm und einer Dicke von 0,7 mm.
Dieses Glas wurde vor der Verwendung mit einer Haftvermittlerschicht versehen. Als Haftvermittler wurden eine Aminosilanschicht aus NoriGlass TP096, NoriPress SMK L 54349 und NoriPress SMK L 54349, erhältlich bei der Firma Pröll, mittels Siebdruck auf eine Seite des Glases aufgetragen. Die einzelnen Aminosilanschichten wurden jeweils nach dem Siebdruck 30 min bei 180°C getrocknet, bevor die nächste Schicht aufgetragen wurde bzw. die Weiterbenutzung erfolgte. Die Gesamtdicke der Haftvermittlerschicht betrug ca. 10 µm.

### 2. Versuchsdurchführung

Die Abmessungen der fertigen Platten der Beispiele 1 bis 6 betrugen 150 mm x 200 mm bei einer Wandstärke von 4 mm. Das thermoplastische Polyurethan wurde jeweils 2 h bei 100°C im Trockenlufttrockner vorgetrocknet. Vor dem Einsetzen der Glasschicht bzw. der Schicht aus thermoplastischem Material wurde die Werkzeugtrennebene jeweils mit einem Silikon-haltigen Trennmittel eingesprüht. Beim Einlegen der Glasschicht wurde darauf geachtet, dass der Haftvermittler der Einspritzseite zugewandt war.

Das Trägerelement, jeweils eine Schicht aus thermoplastischem Polycarbonat, wurde bei Verwendung eines Stangenangusses so präpariert, dass im Bereich des Stangenangusses ein entsprechendes Loch integriert wurde, beispielsweise durch Einstanzen in eine Folienschicht.

Das Trägerelement aus Polycarbonat und das Glaselement hatten bei Einlegen in die Werkzeughälften jeweils Raumtemperatur (ca. 22°C).

Jedes Beispiel wurde fünf Mal durchgeführt.

### Beispiel 1:

Als Werkzeug wurde ein Stahlplattenwerkzeug mit Stangenanguss verwendet. Die Temperatur beider Werkzeughälften betrug 30°C.

Glas-1 wurde in die Werkzeughälfte auf der Auswerferseite des Werkzeugs auf eine PC-Folie gelegt, um die Kante des Glases vor dem direkten Werkzeugkontakt zu schützen.

Eine Schicht aus PC-1 mit eingestanztem Loch für den Anguss wurde mittels eines Ionisators elektrisch aufgeladen, wodurch es möglich war, die PC-1-Schicht mittels Elektrostatik an der Werkzeugwand der Einspritzseite zu befestigen.

Der Thermoplast TPU-1 wurde bei einer Schmelzetemperatur von 205°C eingespritzt. Die Kühlzeit betrug 50 s und der Nachdruck 60 bar.

Nach der Entformung wies das finale Verbundbauteil in zwei Fällen Risse im Glas, in drei Fällen keine Risse im Glas auf und zeigte in allen Fällen nur einen geringen Verzug.

### Beispiel 2:

Als Werkzeug wurde ein Stahlplattenwerkzeug mit Stangenanguss verwendet. Die Temperatur beider Werkzeughälften betrug 30°C.

Glas-1 wurde in die Werkzeughälfte auf der Auswerferseite des Werkzeugs auf eine PC-Folie gestellt, um die Kante des Glases vor dem direkten Werkzeugkontakt zu schützen.

Eine Schicht aus PC-1 mit eingestanztem Loch für den Anguss wurde mittels Elektrostatik an der Werkzeugwand der Einspritzseite befestigt.

Der Thermoplast TPU-2 wurde bei einer Schmelzetemperatur von 240°C eingespritzt. Die Kühlzeit betrug 50 s und der Nachdruck 60 bar.

Nach der Entformung wies das finale Verbundbauteil in zwei Fällen Risse im Glas, in drei Fällen keine Risse im Glas auf. Der Verzug war in allen Fällen etwas größer als der Verzug des finalen Verbundbauteils aus Beispiel 1.

### Beispiel 3:

Als Werkzeug wurde ein Stahlplattenwerkzeug mit Stangenanguss verwendet. Die Temperatur beider Werkzeughälften betrug 80°C.

Glas-1 wurde in die Werkzeughälfte auf der Auswerferseite des Werkzeugs auf eine PC-Folie gestellt, um die Kante des Glases vor dem direkten Werkzeugkontakt zu schützen.

Eine Schicht aus PC-1 mit eingestanztem Loch für den Anguss wurde mittels Elektrostatik an der Werkzeugwand der Einspritzseite befestigt.

Der Thermoplast TPU-1 wurde bei einer Schmelzetemperatur von 240°C eingespritzt. Die Kühlzeit betrug 50 s und der Nachdruck 60 bar.

Nach der Entformung wies das finale Verbundbauteil in zwei Fällen Risse, in drei Fällen keine Risse im Glas auf. Der Verzug des finalen Verbundbauteils war aber größer als der Verzug des finalen Verbundbauteils nach Beispiel 1, welches mit demselben Material, aber bei einer Werkzeugtemperatur von 30°C hergestellt wurde.

### Beispiel 4:

Als Werkzeug wurde ein Stahlplattenwerkzeug mit Fächeranguss verwendet.

Die Temperatur beider Werkzeughälften betrug 30°C.

Glas-1 wurde in die Werkzeughälfte auf der Auswerferseite des Werkzeugs auf eine PC-Folie gestellt, um die Kante des Glases vor dem direkten Werkzeugkontakt zu schützen.

Eine Schicht aus PC-1 wurde mittels Elektrostatik an der Werkzeugwand der Einspritzseite befestigt.

Der Thermoplast TPU-1 wurde bei einer Schmelzetemperatur von 240°C eingespritzt. Die Kühlzeit betrug 50 s und der Nachdruck 60 bar.

Nach der Entformung zeigte sich, dass beim finalen Verbundbauteil das Glas im oberen Bereich in allen Fällen komplett gerissen war. Ursache hierfür war, dass das Glas beim Einspritzen über den Fächeranguss an die gegenüberliegende Werkzeugwand gedrückt wurde, wobei es zu Druckspitzen im Glas kam, die zum Bruch des Glases führten.

### Beispiel 5:

Als Werkzeug wurde ein Stahlplattenwerkzeug mit Stangenanguss verwendet. Die Temperatur beider Werkzeughälften betrug 30°C.

Glas-1 wurde mit einer PE-Klebekaschierfolie vollflächig auf der später zur Werkzeughälfte auf der Auswerferseite gewandten Seite beklebt und in die Werkzeughälfte auf der Auswerferseite des Werkzeugs gelegt.

Eine Schicht aus PC-1 mit eingestanztem Loch für den Anguss wurde mittels eines Ionisators elektrisch aufgeladen, wodurch es möglich war, die PC-1-Schicht mittels Elektrostatik an der Werkzeugwand der Einspritzseite zu befestigen.

Der Thermoplast TPU-1 wurde bei einer Schmelzetemperatur von 205°C eingespritzt. Die Kühlzeit betrug 50 s und der Nachdruck 60 bar.

Nach der Entformung wies das finale Verbundbauteil in allen Fällen keine Risse im Glas auf und zeigte nur einen geringen Verzug.

### Beispiel 6:

Als Werkzeug wurde ein Stahlplattenwerkzeug mit Stangenanguss verwendet, wobei als zusätzliche Kavität ein Einleger für einen Fächeranguss an der unteren Seite des Werkzeuges eingebaut war. Die Temperatur beider Werkzeughälften betrug 30°C.

Glas-1 wurde mit einer Polyethylen-Klebekaschierfolie vollflächig auf der später zur Werkzeughälfte auf der Auswerferseite gewandten Seite beklebt und in die Werkzeughälfte auf der Auswerferseite des Werkzeugs gelegt.

Eine Schicht aus PC-1 mit eingestanztem Loch für den Anguss wurde mittels eines Ionisators elektrisch aufgeladen, wodurch es möglich war, die PC-1-Schicht mittels Elektrostatik an der Werkzeugwand der Einspritzseite zu befestigen.

Der Thermoplast TPU-1 wurde bei einer Schmelzetemperatur von 205°C eingespritzt. Die Kühlzeit betrug 50 s und der Nachdruck 60 bar.

Nach der Entformung wies das finale Verbundbauteil in allen Fällen keine Risse im Glas auf und zeigte nur einen geringen Verzug. Die zusätzliche Kavität war mit TPU gefüllt und wurde händisch entfernt.

## Patentansprüche

1. Verbundbauteil aus
a) einer Schicht aus Glas,
b) einer Schicht aus einem thermoplastischen Material,
c) einer zwischen den Schichten a) und b) angeordneten Schicht aus thermoplastischem Polyurethan und
d) einer zwischen den Schichten a) und c) liegenden Haftvermittlerschicht,
**dadurch gekennzeichnet, dass** das Glas chemisch vorgespannt ist.

2. Verbundbauteil nach Anspruch 1, **dadurch gekennzeichnet, dass** das Glas ein Alumosilikatglas ist und die Glasschicht a) eine Dicke zwischen 20 µm und 3,0 mm aufweist.

3. Verbundbauteil nach Anspruch 1, **dadurch gekennzeichnet, dass** das Glas ein Alumosilikatglas ist und die Glasschicht a) eine Dicke zwischen 0,5 und 1,0 mm aufweist.

4. Verbundbauteil nach einem der vorhergehenden Ansprüche, **dadurch gekennzeichnet, dass** das Verbundbauteil eine dreidimensional geformte Oberfläche aufweist.

5. Verbundbauteil nach einem der vorhergehenden Ansprüche, **dadurch gekennzeichnet, dass** das thermoplastische Material ein Polycarbonat oder eine Polycarbonat-Zusammensetzung ist.

6. Verbundbauteil nach einem der vorhergehenden Ansprüche, **dadurch gekennzeichnet, dass** die Haftvermittlerschicht eine Aminosilanschicht ist.

7. Verbundbauteil nach einem der vorhergehenden Ansprüche, **dadurch gekennzeichnet, dass** die Haftvermittlerschicht mittels einer Plasmabehandlung aufgebracht ist.

8. Verbundbauteil nach einem der vorhergehenden Ansprüche, **dadurch gekennzeichnet, dass** die Schicht aus thermoplastischem Polyurethan außer in Bereichen, wo in der späteren Verarbeitung des Verbundbauteils ein Funktionselement eingebaut wird, auf einem Teil oder der gesamten Überlappungsfläche der Glasschicht mit der Schicht aus thermoplastischem Material aufgebracht ist.

9. Element für die Gestaltung eines Fahrzeuginnenraumes, insbesondere eine Mittelkonsolenabdeckung, eine Klimablendenabdeckung, eine Türseitenverkleidung, eine Rücksitzlehne, eine Gehäuseabdeckung oder ein Dekorelement eines Armaturenbrettes, umfassend ein Verbundbauteil nach einem der Ansprüche 1 bis 8.

10. Verfahren zur Herstellung eines Verbundbauteils nach einem der Ansprüche 1 bis 8, umfassend die folgenden Schritte:
a) Einlegen eines thermoplastischen Trägerelements in eine erste Werkzeughälfte,
b) Einlegen eines chemisch vorgespannten Glaselementes, welches mit Haftvermittler beschichtet ist oder vor dem Einspritzen des thermischen Polyurethans mit Haftvermittler beschichtet wird, in eine zweite Werkzeughälfte;
c) Schließen des Werkzeuges, welche die erste Werkzeughälfte und die zweite Werkzeughälfte umfasst, wobei ein Spalt zwischen dem Trägerelement und dem Glaselement verbleibt;
d) Einspritzen von thermoplastischem Polyurethan in den Spalt, wobei sich das Glaselement beim Einspritzen des thermoplastischen Polyurethans nicht mehr bewegt.

11. Verfahren nach Anspruch 10, **dadurch gekennzeichnet, dass** das Trägerelement und das Glaselement dreidimensional geformt sind.

12. Verfahren nach Anspruch 10 oder 11, **dadurch gekennzeichnet, dass** die Werkzeugtemperatur beim Einspritzen des thermoplastischen Polyurethans zwischen +10 und +35°C liegt.

13. Verfahren nach einem der Ansprüche 10 bis 12, **dadurch gekennzeichnet, dass** das thermoplastische Polyurethan mittels Stangenanguss oder über einen Heißkanal in den Spalt zwischen Glaselement und Trägerschicht aus thermoplastischem Material eingespritzt wird.

14. Verfahren nach Anspruch 13, **dadurch gekennzeichnet, dass** die Einspritzung des thermoplastischen Polyurethans in einem Winkel von 90° oder annähernd 90° zur Hauptebene des eingelegten Glaselementes erfolgt, wobei das Glaselement durch den Einspritzprozess nicht verschoben wird.

15. Verfahren nach einem der Ansprüche 10 bis 14, **dadurch gekennzeichnet, dass** das Glaselement vor dem Einlegen in die zweite Werkzeughälfte vollflächig mit einer Polyethylen-Klebekaschierung, welche eine Kaschierfolie bildet, beklebt wird und diese Kaschierfolie nach dem Spritzgussprozess auf dem Bauteil verbleibt, um erst nach dem Einbau des Verbundbauteils rückstandlos von dem Bauteil abgezogen zu werden.
